Europäisches Patentamt

European Patent Office

Office européen des brevets

(11) Veröffentlichungsnummer: **0 031 894**
**B1**

(19)

(12) EUROPÄISCHE PATENTSCHRIFT

(45) Veröffentlichungstag der Patentschrift:
29.06.83

(21) Anmeldenummer: 80107417.0

(22) Anmeldetag: 27.11.80

(51) Int. Cl.³: **C 02 F 11/14,** B 01 F 3/12,
B 01 F 7/08, B 01 J 2/10

(54) Vorrichtung zum kontinuierlichen Vermischen und Granulieren von Schlamm mit einem Feststoff.

(30) Priorität: 07.01.80 DE 3000329

(43) Veröffentlichungstag der Anmeldung:
15.07.81 Patentblatt 81/28

(45) Bekanntmachung des Hinweises auf die Patenterteilung:
29.06.83 Patentblatt 83/26

(84) Benannte Vertragsstaaten:
AT BE CH DE FR GB LI LU NL SE

(56) Entgegenhaltungen:
DE-A-2 239 733

(73) Patentinhaber: Rheinische Kalksteinwerke GmbH.,
Wilhelmstrasse 77, D-5603 Wülfrath (DE)

(72) Erfinder: Mrai, Heinz, Ing.grad., Westfalenweg 239,
D-5600 Wuppertal 1 (DE)
Erfinder: Reicheit, Rainer, Dr. Dipl.-Ing.,
Mülheimerstrasse 17, D-4030 Ratingen (DE)
Erfinder: Clausdorff, Theodor, Dipl.-Ing., Bruchhauser
Weg 1, D-4010 Hilden (DE)

(74) Vertreter: Wiensz, Klaus, Dr., Postfach 100 506,
D-4020 Mettmann (DE)

Vorrichtung zum kontinuierlichen Vermischen und Granulieren von Schlamm mit einem Feststoff

Die vorliegende Erfindung betrifft eine Vorrichtung zum kontinuierlichen Vermischen von Schlamm, insbesondere wasserhaltigem Klärschlamm, mit einem hydratisierbaren bzw. hydraulisch abbindenden Feststoff und zum Granulieren der Mischung, im wesentlichen bestehend aus Schlamm- und Feststoffdosier- sowie Mischund Granuliereinrichtungen für das Gemisch.

Auf dem Gebiet der Abwasserbeseitigung werden zunehmend Anstrengungen vorgenommen, den anfallenden Klärschlamm entweder in eine deponierfähige festere Konsistenz zu überführen, oder aber durch Zusatz weiterer verfestigender Stoffe zu granulieren, um dann dieses Granulat als Düngemittel bzw. als Bodenverbesserungsmittel einsetzen zu können. So ist es zum Beispiel bekannt, den Klärschlamm mit gebranntem Kalk zu vermischen, wobei der Kalk durch den Wassergehalt des Klärschlamms hydratisiert wird; die Mischung erhitzt sich dabei auf Temperaturen bis zu 100°C und mehr, so dass gleichzeitig eine Hygienisierung und Pasteurisierung des Klärschlamms erfolgt. Das auf diese Weise gewonnene Erzeugnis kann daher unmittelbar und unbedenklich entweder in pulveriger Form oder als Granulat, als Bodenverbesserungsmittel bzw. als kalkhaltiger Dünger in der Landwirtschaft eingesetzt werden und belastet nicht die Deponie.

Die technische Durchführung des oben spezifizierten Verfahrens bereitet jedoch insbesondere bei kontinuierlicher Betriebsweise eine Reihe von Schwierigkeiten, die im wesentlichen dadurch bedingt sind, dass hier Stoffe mit unterschiedlicher Konsistenz, also Schlämme einerseits und Feststoffe andererseits, mit ausreichender Dosiergenauigkeit zu mischen sind. Es kommt hinzu, dass der gebrannte Kalk mit dem Wasseranteil des Schlamms exotherm unter Bildung von Calciumhydroxid reagiert, wobei sich die Mischung vorübergehend verfestigt und wobei ferner ein Teil des Wassers aus dem Schlamm verdampft. Durch die Verfestigung der Mischung entstehen leicht Verkrustungen des Fördermittels, insbesondere im Bereich der Dosierstrecke, wodurch der kontinuierliche Materialfluss erheblich gestört wird. Auch getrennte Zuführungen mit Übergabestellen neigen zu Störungen im Materialfluss durch Verstopfung der Übergabestellen, so dass auch diese Methode nicht zum Erfolg geführt hat. Versuche in der Praxis haben weiterhin zu der Erkenntnis geführt, dass die Wassergehalte der Schlämme und auch die Konsistenz der Schlämme Schwankungen unterworfen sind.

Als besondere Schwierigkeit bei der Durchführung der zuvor beschriebenen Verfahren hat sich jedoch herausgestellt, dass beim Einsatz von gebranntem Kalk bei dessen Zusammentreffen mit dem wasserhaltigen Schlamm erhebliche Dampfmengen entstehen, die den noch unvermischten Kalk hydratisieren und somit Störungen bei der Kalkdosierung und der Kalkzuförderung verursachen können.

Es bestand daher die Aufgabe, eine kontinuierlich arbeitende Vorrichtung zum Vermischen und Granulieren von Schlamm mit einem Feststoff, vorzugsweise gebranntem Kalk, zu schaffen, welche sich ändernden Betriebsverhältnissen schnell und optimal angepasst werden kann und die weitgehend störungssicher ist.

Es wurde gefunden, dass diese Aufgabe durch eine Vorrichtung gelöst werden kann, welche als Schlammdosiereinrichtung eine Förderschnecke und als Feststoffdosiereinrichtung eine Zellenradschleuse vorsieht, deren Austrag einer gesonderten Förderschnecke zugeführt wird und dass beide Förderschnecken ihr gefördertes Gut den Mischund Granuliereinrichtungen getrennt zufördern.

Gemäss einer vorteilhaften Ausführungsform wird im Anschluss an die Schlamm- und Feststoffdosier- und Zufördereinrichtungen eine Mischeinrichtung vorgesehen, die in ihrem ersten Teil aus einer Mischschnecke besteht.

Es ist weiterhin vorteilhaft, wenn die erfindungsgemässe Vorrichtung im ersten Teil der Mischeinrichtung aus zwei ineinander arbeitenden Mischschnecken besteht und die Schlammdosiereinrichtung sowei die Feststoffzuführung zuförderungsmässig mit jeweils einer Mischschnecke verbunden sind.

Besonders vorteilhaft lässt sich die erfindungsgemässe Vorrichtung gestalten durch koaxiale Anordnungen der Schlammdosiereinrichtung und der Feststoffzuführungseinrichtung mit jeweils einer Mischschnecke.

Die Vorrichtung gemäss vorliegender Erfindung stellt sicher, dass im Bereich der Vermischungsstelle von zugeführtem Schlamm und zugeführtem Feststoff, insbesondere wenn als Feststoff gebrannter Kalk eingesetzt wird, die Dampfentwicklung die Feststoffzuführung und -dosierung nicht beeinträchtigt. Die Ausbildung des ersten Teiles der Mischstrecke als Mischschnecke und insbesondere die bevorzugte Ausführungsform, bei welcher zwei Mischschnecken vorgesehen sind, die ineinander arbeiten, stellt sicher, dass die zugeförderten Stoffe sofort nach ihrem Eintritt in den Mischbereich nicht nur miteinander vermischt, sondern auch weitergefördert werden. Dies hat zur Folge, dass auch ein Anstauen der zugeförderten Stoffe und Verklumpungen weitgehend vermieden werden.

An die erste Mischstrecke, die als Schneckenmischer ausgebildet ist und nur wenige Schneckenwindungen aufzuweisen braucht, schliessen sich weitere Misch- und Granuliereinrichtungen an, die zum Beispiel als Mischpaddel ausgebildet sein können und zweckmässigerweise hinsichtlich des Misch- und Granuliereffektes verstellbar auszubilden sind.

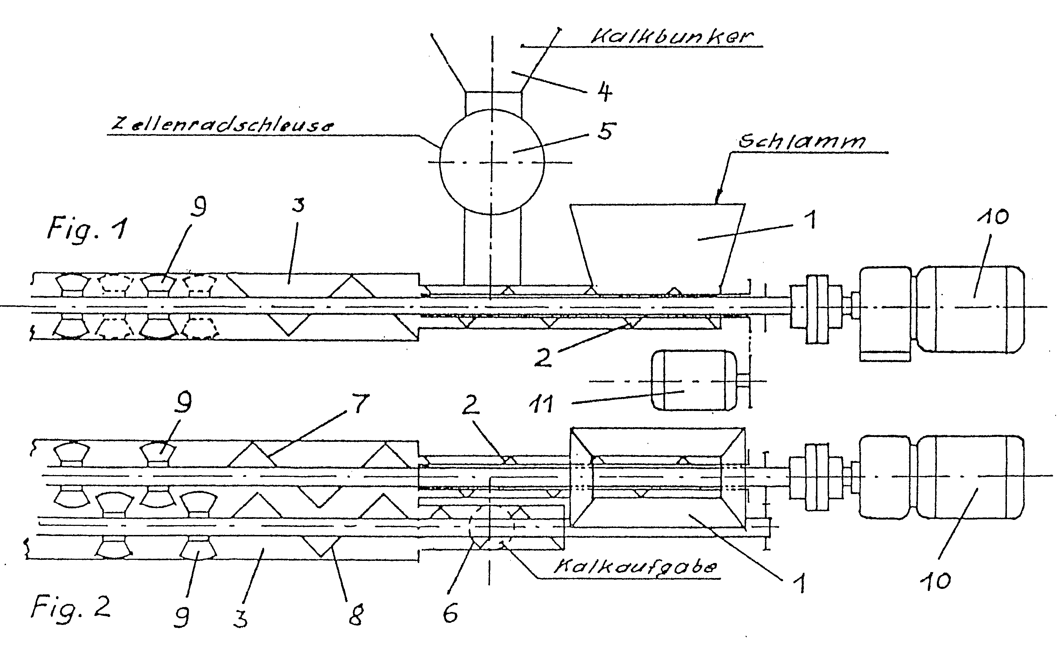

Die Zeichnung soll die erfindungsgemässe Vorrichtung beispielhaft erläutern. Fig. 1 zeigt eine Ausführungsform der Erfindung, zum Teil in Schnittdarstellung. Fig. 2 zeigt eine Draufsicht der Darstellung gemäss Fig. 1, ebenfalls teilweise in Schnittdarstellung. Der Schlamm wird dem Behälter 1 zugeführt und aus diesem mit Hilfe der Schnecke 2 dosiert der Misch- und Granuliereinrichtung 3 zugeführt. Als Feststoff wird hier Kalk eingesetzt, welcher aus dem Bunkerauslauf 4 über eine Zellenradschleuse 5 auf eine Förderschnecke 6 gelangt und von dieser in die Misch- und Granuliereinrichtung 3 transportiert wird, wo der Kalk mit dem Schlamm in Berührung kommt. Die Misch- und Granuliereinrichtung 3 besteht in ihrem ersten Teil aus zwei ineinander arbeitenden Mischschnecken 7 und 8 sowie sich daran anschliessenden Mischpaddeln 9. Die Misch- und Granuliereinrichtung sowie die Kalkförderschnecke besitzen einen gemeinsamen Antrieb 10. Die Schlammdosier- und Förderschnecke wird durch einen gesonderten Antrieb 11 angetrieben, ebenfalls die Zellenradschleuse 5, so dass beim Betrieb durch entsprechende Antriebssteuerungen die Schlammenge im Verhältnis zur Kalkmenge und schliesslich auch die Gesamtmenge der zu vermischenden und zu granulierenden Stoffe — Beaufschlagung der Misch- und Granuliereinrichtung — variiert werden können.

## Patentansprüche

1. Vorrichtung zum kontinuierlichen Vermischen von Schlamm, insbesondere wasserhaltigem Klärschlamm, mit einem hydratisierbaren bzw. hydraulisch abbindenden Feststoff und zum Granulieren der Mischung, im wesentlichen bestehend aus Schlamm- und Feststoffdosier- sowie Misch- und Granuliereinrichtungen für das Gemisch, dadurch gekennzeichnet, dass als Schlammdosiereinrichtung eine Förderschneck und als Feststoffdosiereinrichtung eine Zellenradschleuse vorgesehen ist, deren Austrag einer gesonderten Förderschnecke zugeführt wird und dass beide Förderschnecken ihr gefördertes Gut den Misch- und Granuliereinrichtungen getrennt zufördern.

2. Vorrichtung nach Anspruch 1, dadurch gekennzeichnet, dass im Anschluss an die Schlamm- und Feststoffdosier- und Zuführereinrichtungen eine Mischeinrichtung vorgesehen ist, die in ihrem ersten Teil aus einer Mischschneck besteht.

3. Vorrichtung nach einem der Ansprüche 1 oder 2, dadurch gekennzeichnet, dass die Mischeinrichtung in ihrem ersten Teil aus zwei ineinander arbeitenden Mischschnecken besteht und dass die Schlammdosiereinrichtung sowie die Feststoffzuführung zuförderungsmässig mit jeweils einer Mischschnecke verbunden sind.

4. Vorrichtung nach den Ansprüchen 1 bis 3, gekennzeichnet durch koaxiale Anordnungen der Schlammdosiereinrichtung und der Feststoffzuführungseinrichtung mit jeweils einer Mischschnecke.

## Revendications

1. Installation pour le mélange en continu de schlamm, notamment de boues de clarification contenant de l'eau, avec une matière solide pouvant être hydratée et constituant un liant hydraulique, et pour la granulation de ce mélange, installation comprenant essentiellement un dispositif de dosage de schlamm et un dispositif de dosage de matière solide, ainsi que des dispositifs de mélange et de granulation du mélange obtenu, installation caractérisée en ce que le dispositif de dosage de schlamm est constitué par une vis sans fin de transport, et le dispositif de dosage de matière solide est constitué par une écluse à roue à cellules, dont le produit de sortie est amené à une vis sans fin de transport spécial, les deux vis sans fin amenant la matière transportée aux dispositifs de mélange et de granulation.

2. Installation suivant la revendication 1, caractérisée en ce que, à la suite des dispositifs de dosage de schlamm et de matière solide et des dispositifs d'amenée, est prévu un dispositif de mélange dont la première partie est constituée par une vis sans fin de mélange.

3. Installation suivant l'une des revendications 1 ou 2, caractérisée en ce que le dispositif de mélange consiste, dans sa première partie, en deux vis sans fin de mélange agissant l'une dans l'autre, et le dispositif de dosage de schlamm ainsi que le dispositif d'amenée de matière solide sont reliés entre eux, pour un transport combiné chacun au moyen d'une vis sans fin de mélange.

4. Installation suivant l'une quelconque des revendications 1 à 3, caractérisée par une disposition coaxiale du dispositif de dosage de schlamm et du dispositif d'amenée de matière solide avec chacun une vis sans fin de mélange.

## Claims

1. An apparatus for continuously mixing sludge, in particular aqueous sewage sludge, with a hydratable or a hydraulically setting solid, and for granulating the mixture, essentially comprising sludge and solid metering apparatus and mixing and granulating apparatus for the mixture, characterised in that a conveyor worm is provided as the sludge metering apparatus, and a cellular wheel sluice is provided as the solid metering apparatus, the discharge of which is delivered to a separate conveyor worm, and both conveyor worms convey their transported material separately to the mixing and granulating apparatus.

2. An apparatus according to claim 1, characterised in that a mixing apparatus is provided connected to the sludge and solid metering and conveying apparatus, the first part of the mixing apparatus comprising a mixing worm.

3. An apparatus according to claim 1 or 2, characterised in that the first part of the mixing apparatus comprises two mixing worms which work into each other, and the sludge metering apparatus and the solid supply are connected in each case in terms of conveyance with one mixing worm.

4. An apparatus according to claims 1 to 3, characterised by coaxial arrangements of the sludge-metering apparatus and the solid supply apparatus with in each case one mixing worm.

Fig. 1

Fig. 2